(19) Europäisches Patentamt
European Patent Office
Office européen des brevets

(11) **EP 2 401 645 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(21) Anmeldenummer: **10709456.7**

(22) Anmeldetag: **25.02.2010**

(51) Int Cl.:
**G02B 27/01** *(2006.01)*

(86) Internationale Anmeldenummer:
**PCT/EP2010/052426**

(87) Internationale Veröffentlichungsnummer:
**WO 2010/097442 (02.09.2010 Gazette 2010/35)**

(54) **ANZEIGEVORRICHTUNG MIT EINEM MULTIFUNKTIONSGLAS UND HERSTELLUNGSVERFAHREN**

DISPLAY DEVICE COMPRISING MULTIFUNCTION GLASS AND PRODUCTION METHOD

DISPOSITIF D'AFFICHAGE À VERRE MULTIFONCTION ET PROCÉDÉ DE FABRICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.02.2009 DE 102009010538**

(43) Veröffentlichungstag der Anmeldung:
**04.01.2012 Patentblatt 2012/01**

(73) Patentinhaber: **tooz technologies GmbH 73430 Aalen (DE)**

(72) Erfinder:
• **DOBSCHAL, Hans-Jürgen**
  **99510 Kleinromstedt (DE)**
• **RUDOLPH, Günter**
  **07743 Jena (DE)**
• **LINDIG, Karsten**
  **99084 Erfurt (DE)**

(74) Vertreter: **Patentanwälte Geyer, Fehners & Partner mbB**
  **Perhamerstrasse 31**
  **80687 München (DE)**

(56) Entgegenhaltungen:
WO-A1-2008/070431    WO-A1-2008/089992
WO-A2-2004/109349    WO-A2-2010/034639
DE-A1-102008 049 407

• **ERISMANN F: "DESIGN OF A PLASTIC ASPHERIC FRESNEL LENS WITH A SPHERICAL SHAPE" OPTICAL ENGINEERING, SOC. OF PHOTO-OPTICAL INSTRUMENTATION ENGINEERS, BELLINGHAM LNKD-DOI:10.1117/1.601292, Bd. 36, Nr. 4, 1. April 1997 (1997-04-01), Seiten 988-991, XP000700904 ISSN: 0091-3286**
• **VANDERWERF D: "Approximating the Fresnel Lens" ELECTRO-OPTICAL SYSTEMS DESIGN, MILTON S. KIVER PUBLICATIONS, CHICAGO, US, Bd. 14, Nr. 2, 1. Januar 1982 (1982-01-01), Seiten 47-51, XP002151625 ISSN: 0424-8457**

EP 2 401 645 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einem an der Haltevorrichtung befestigten Multifunktionsglas, das eine Vorderseite, eine Rückseite, einen Einkoppelbereich und einen Auskoppelbereich aufweist, wobei das erzeugte Bild über den Einkoppelbereich in das Multifunktionsglas eingekoppelt, im Multifunktionsglas durch innere Totalreflexion an der Rückseite sowie an der Vorderseite bis zum Auskoppelbereich geführt und über den Auskoppelbereich so ausgekoppelt wird, dass der Benutzer im auf den Kopf aufgesetzten Zustand der Haltevorrichtung das ausgekoppelte Bild in Überlagerung mit der Umgebung wahrnehmen kann, wobei der Einkoppelbereich eine Fresnel-Struktur umfasst, die bei der Einkopplung des Bildes in das Multifunktionsglas eine Strahlengangfaltung bewirkt und eine abbildende Eigenschaft aufweist. Ferner betrifft die vorliegende Erfindung ein Verfahren zur Herstellung eines Multifunktionsglases einer solchen Anzeigevorrichtung.

Aus der US 6,989,992 B2 ist eine rotationssymmetrische Fresnel-Linse bekannt, die in Transmission zur Lichtumlenkung und optischen Abbildung in Rückprojektionsgeräten eingesetzt wird. Aus der US 7,178,947 B2 ist eine in Reflexion arbeitende rotationssymmetrische Fresnel-Linse mit konkaven Fresnel-Strukturen bekannt, die in einer Beleuchtungsoptik eingesetzt wird. Ferner ist aus der US 4,510,560 eine in Reflexion arbeitende Fresnel-Struktur bekannt, die zur Strahlformung dient und bei der von einer zylindrischen Profilform ausgegangen wird.

Eine Anzeigevorrichtung der eingangs genannten Art ist aus der WO 2008/089992 A1 bekannt. Die WO 2004/109349 A1 zeigt eine weitere Anzeigevorrichtung mit einem Multifunktionsglas.

Bei Anzeigevorrichtungen gemäß der eingangs genannten Art besteht häufig die Schwierigkeit, das erzeugte Bild so in das Multifunktionsglas einzukoppeln, dass es in diesem bis zum Auskoppelbereich geführt wird, ohne dass dabei störende Bildfehler auftreten. Auch weisen bekannte Anzeigevorrichtungen einen hohen Raumbedarf auf, da das erzeugte Bild über die Vorderseite oder die Stirnseite in das Multifunktionsglas eintritt.

Ausgehend hiervon ist es Aufgabe der Erfindung, die Anzeigevorrichtung der eingangs genannten Art so zu verbessern, dass die Einkopplung so erfolgt, dass störende Bildfehler möglichst vermieden werden, und dass die Anzeigevorrichtung kompakt ausgebildet werden kann. Ferner soll ein Herstellungsverfahren eines Multifunktionsglases einer solchen Anzeigevorrichtung bereitgestellt werden.

Die Aufgabe wird bei einer Anzeigevorrichtung der eingangs genannten Art dadurch gelöst, dass die Fresnel-Struktur auf der Vorderseite ausgebildet ist und mehrere Fresnel-Segmente aufweist, deren optisch wirksame Facetten optisch einer gedachten optischen Wirkfläche entsprechen, die gekrümmt ist sowie weder einen Spiegel- noch eine Rotationssymmetrie aufweist, wobei das erzeugte Bild vom Bilderzeugungsmodul über die Rückseite in das Multifunktionsglas eintritt und zur Einkopplung auf die Fresnel-Struktur des Einkoppelbereichs trifft.

Durch die optisch wirksamen Facetten, die optisch der gedachten optischen Wirkfläche entsprechen, kann die gewünschte Strahlengangfaltung und die gewünschte abbildende Eigenschaft so realisiert werden, dass störende Bildfehler möglichst vermieden werden. Da die Fresnel-Struktur auf der Vorderseite (die beispielsweise gekrümmt ausgebildet sein kann) des Multifunktionsglases ausgebildet ist, wird eine hohe Designfreiheit für das Multifunktionsglas bereitgestellt, die kaum oder gar nicht durch die notwendige optische Funktion des Einkoppelbereiches beschränkt wird, da die optische Funktion des Einkoppelbereiches mittels der Fresnel-Struktur verwirklicht wird.

Ferner kann mittels der abbildenden Eigenschaft der Fresnel-Struktur störenden Bildfehlern wirksam entgegengetreten werden.

Da das erzeugte Bild über die Rückseite in das Multifunktionsglas eintritt, kann die Anzeigevorrichtung kompakt ausgebildet werden.

Die Fresnel-Struktur kann transmissiv oder reflektiv ausgebildet sein.

Ferner weist die optische Wirkfläche bevorzugt auch keine Translationssymmetrie auf.

Die maximale Höhe jeder Facette ist bei der Fresnel-Struktur bevorzugt gleich groß. Sie liegt beispielsweise im Bereich von 5 - 500 $\mu$m, insbesondere im Bereich von 0,01 - 0,1 mm. Besonders bevorzugt ist ein Bereich von 200 - 300 $\mu$m sowie ein Bereich von 0,05 - 0,3 mm.

Die Facettenform kann eine Näherung, insbesondere eine lineare Näherung der Form des entsprechenden Flächenabschnittes der gedachten Wirkfläche sein. Insbesondere können die Facetten im Schnitt konkav oder konvex sein.

Die Fresnel-Segmente können direkt benachbart sein, wie dies bei einer "klassischen" Fresnel-Struktur ist. Es ist jedoch möglich, dass die Fresnel-Segmente voneinander beabstandet sind, wobei zwischen ihnen dann der normale Verlauf der Materialgrenzfläche vorliegt.

Es wird ferner bereitgestellt ein Verfahren zur Herstellung eines Multifunktionsglases einer erfindungsgemäßen Anzeigevorrichtung, bei dem in dem Einkoppelbereich des Multifunktionsglases die Fresnel-Struktur, die eine abbildende sowie eine für den Strahlengang faltende Eigenschaft aufweist, auf der Vorderseite des Multifunktionsglases gebildet wird, wobei die Fresnel-Struktur mehrere Fresnel-Segmente aufweisen, wobei die optisch wirksamen Facetten der Fresnel-Segmente so ausgebildet werden, dass sie optisch einer gedachten optischen Wirkfläche entsprechen, die gekrümmt ist und weder eine Spiegelsymmetrie noch eine Rotationssymmetrie aufweist. Insbesondere kann die optische Wirkfläche auch keine Translationssymmetrie aufweisen.

Mit diesem Verfahren kann leicht ein Multifunktionsglas für die erfindungsgemäße Anzeigevorrichtung und damit auch die erfindungsgemäße Anzeigevorrichtung selbst hergestellt werden.

Bei dem Herstellungsverfahren kann die Fresnel-Struktur auf einer gekrümmt ausgebildeten Vorderseite des Multifunktionsglases gebildet werden. Damit kann quasi eine Kopplung des Designs des Multifunktionsglases selbst (seiner Form und Krümmung) von seinem Einkoppelbereich durchgeführt werden. Sobald die Form des Multifunktionsglases festliegt, kann die Fresnel-Struktur für den Einkoppelbereich berechnet und gefertigt werden.

Bei dem erfindungsgemäßen Herstellungsverfahren kann das Multifunktionsglas basierend auf Herstellungsdaten hergestellt werden, die rechnerisch dadurch erzeugt werden, dass eine optische Modellfläche in mehrere Höhenbereich aufgeteilt wird und die Flächenabschnitte der einzelnen Höhenbereiche oder Näherung dieser Flächenabschnitte an einer Grundfläche rechnerisch so angeordnet werden, dass sie optisch der optischen Wirkfläche entsprechen. Die Aufteilung in die mehreren Höhenbereiche kann mit konstanter Höhe oder auch mit variierender Höhe erfolgen. Insbesondere liegt die Höhe im Bereich von 5 - 500 $\mu$m sowie im Bereich von 0,01 - 0,1 mm. Besonders bevorzugt ist ein Bereich von 200 - 300 $\mu$m sowie ein Bereich von 0,05 - 0,3 mm.

Die Höhenbereiche können insbesondere so gewählt werden, dass der Abstand zur Grundfläche jeweils konstant ist.

Die Flächenabschnitte bzw. die Näherung der Flächenabschnitte können rechnerisch an einer planen oder an einer gekrümmten Grundfläche angeordnet werden. Insbesondere die Anordnung einer gekrümmten Grundfläche ist von Vorteil, da in diesem Fall die Materialgrenzfläche des Multifunktionsglases auch gekrümmt sein kann. Als Näherung der Flächenabschnitte wird insbesondere eine lineare Näherung durchgeführt. Es ist jedoch auch jede andere Art der Näherung möglich.

Die Facetten können so ausgebildet werden, dass die maximale Höhe aller Facetten gleich groß ist.

Insbesondere kann das erfindungsgemäße Herstellungsverfahren so weitergebildet werden, dass das Multifunktionsglas der erfindungsgemäßen Anzeigevorrichtung (einschließlich aller Weiterbildungen) hergestellt werden kann.

Es wird ferner bereitgestellt ein optisches Element mit einer optisch wirksamen Fläche, die zumindest teilweise eine Fresnel-Struktur mit mehreren Fresnel-Segmenten aufweist, wobei die optisch wirksamen Facetten der Fresnel-Segmente optisch einer gedachten optischen Wirkfläche entsprechen, die gekrümmt ist und keine Spiegel- oder Rotationssymmetrie aufweisen.

Das optische Element ist als Multifunktionsglas der erfindungsgemäßen Anzeigevorrichtung ausgebildet.

Eine solche optische Wirkfläche, die weder Spiegel- noch Rotationssymmetrie aufweist und die nachfolgend auch als Freiformfläche bezeichnet wird, kann unabhängig von ihrer räumlichen Ausdehnung zunächst rechnerisch optimiert werden, damit das dann gefertigte optische Element mit der Fresnel-Struktur die gewünschten Eigenschaften aufweist. Bei der Umsetzung der Freiformfläche als Fresnel-Struktur spielt die räumliche Ausdehnung der Freiformfläche praktisch keine Rolle, da diese durch die einzelnen Facetten optisch äquivalent bereitgestellt werden kann, so dass die oben erwähnte rechnerische Optimierung durchgeführt werden kann.

Die maximale Facetten-Höhe kann vorgegeben werden und beispielsweise im Bereich von 5 - 500 $\mu$m, insbesondere im Bereich von 0,01 - 0,1 mm liegen. Besonders bevorzugt ist ein Bereich von 200 - 300 $\mu$m sowie ein Bereich von 0,05 - 0,3 mm.

Die optische Wirkfläche weist bevorzugt auch keine Translationssymmetrie auf.

Insbesondere ist die optisch wirksame Fläche eine Grenzfläche des optischen Elementes. Das erleichtert die Herstellung des optischen Elementes. So kann es beispielsweise durch Diamantfräsen hergestellt werden. Es ist jedoch auch möglich, das optische Element durch Abform- und Gussverfahren herzustellen.

Die Fresnel-Segmente können als reflektive oder als refraktive Segmente ausgebildet werden. Im Fall der reflektiven Ausbildung kann die Reflektivität eingestellt werden und in einem Bereich von größer 0 bis nahezu 100 % liegen.

Insbesondere kann bei dem optischen Element die maximale Höhe jeder Facette gleich groß sein.

Ferner kann die Facettenform eine Näherung, insbesondere eine lineare Näherung der Form des entsprechenden Flächenabschnitts der gedachten Wirkfläche sein. Damit kann immer noch eine optisch entsprechende Wirkung erreicht werden. Natürlich ist die optische Wirkung der Fresnel-Struktur in Realität nicht identisch zur optischen Wirkung der gedachten optischen Wirkfläche. Wesentlich ist erfindungsgemäß, dass die Abweichung der tatsächlichen optischen Wirkung der Fresnel-Struktur von der optimalen optischen Wirkung der gedachten optischen Wirkfläche so gering ist, dass das optische Element die gestellten optischen Anforderungen erfüllt, wie dies stets bei optischen Elementen der Fall ist, die in Realität nie die theoretisch maximale optische Wirkung erreichen.

Die Facetten können im Schnitt konkav oder auch konvex gekrümmt sein.

Ferner können die Fresnel-Segmente direkt benachbart sein. Es ist jedoch auch möglich, dass einzelne Fresnel-Segmente voneinander beabstandet sind.

Die optisch wirksame Fläche mit der Fresnel-Struktur ist insbesondere eine zusammenhängende Fläche.

Es wird ferner ein Verfahren zur Herstellung des optischen Elementes mit einer optisch wirksamen Fläche, die zumindest teilweise eine Fresnel-Struktur mit mehreren Fresnel-Segmenten aufweist, bereitgestellt, bei der die optisch wirksamen Facetten der Fresnel-Segmente so ausgebildet werden, dass sie optisch einer gedachten optischen Wirkfläche entsprechen, die gekrümmt ist und keine Spiegel- oder Rotationssymmetrie aufweist.

Mit diesem Herstellungsverfahren kann ein optisches Element mit ausgezeichneten optischen Eigenschaften hergestellt werden.

Die optische Wirkfläche kann insbesondere auch keine Translationssymmetrie aufweisen.

Die Fresnel-Segmente werden bevorzugt an einer Grenzfläche des optischen Elementes ausgebildet. Das vereinfacht die Herstellung des optischen Elementes.

Das optische Element kann basierend auf Herstellungsdaten hergestellt werden, die rechnerisch dadurch erzeugt werden, dass eine optische Modellfläche in mehrere Höhenbereiche aufgeteilt wird und die Flächenabschnitte der einzelnen Höhenbereiche oder Näherungen dieser Flächenabschnitte an einer Grundfläche (z.B. auf der oder unter der Grundfläche) rechnerisch so angeordnet werden, dass sie optisch der optischen Wirkfläche entsprechen. Die Aufteilung in die mehreren Höhenbereiche kann mit konstanter Höhe oder auch mit variierender Höhe erfolgen. Insbesondere liegt die Höhe im Bereich von 5 - 500 $\mu$m oder im Bereich von 0,01 - 0,1 mm. Besonders bevorzugt ist ein Bereich von 200 - 300 $\mu$m sowie ein Bereich von 0,05 - 0,3 mm.

Die Höhenbereiche können insbesondere so gewählt werden, dass der Abstand zur Grundfläche jeweils konstant ist.

Die Flächenabschnitte bzw. die Näherung der Flächenabschnitte können rechnerisch an einer planen oder an einer gekrümmten Grundfläche angeordnet werden.

Insbesondere kann als Näherung der Flächenabschnitte eine lineare Näherung gewählt werden. Es ist jedoch auch jede andere Art der Näherung möglich.

Die Facetten können so ausgebildet werden, dass die maximale Höhe aller Facetten gleich groß ist.

Insbesondere kann das erfindungsgemäße Herstellungsverfahren so weitergebildet werden, dass das erfindungsgemäße optische Element sowie seine Weiterbildungen hergestellt werden können.

Das optische Element wird im Bereich von HMD-Vorrichtungen (Head Mounted Display-Vorrichtungen) eingesetzt.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Dabei werden unter anderem optische Elemente und Strahlvereiniger beschrieben, die als Multifunktionsglas für die erfindungsgemäße Anzeigevorrichtung dienen. Es zeigen:

| | |
|---|---|
| Fig. 1 | eine perspektivische Ansicht einer ersten Ausführungsform des erfindungsgemäßen optischen Elementes; |
| Fig. 2 | den Verlauf der optischen Wirkfläche, der mit der Fresnel-Struktur 3 gemäß Fig. 1 nachgebildet ist; |
| Fig. 3 | eine Draufsicht des optischen Elements von Fig. 1; |
| Fig. 4 | einen xz-Schnitt der Wirkfläche 8; |
| Fig. 5 | eine vergrößerte Darstellung des Details C von Fig. 4; |
| Fig. 6-9 | verschiedene Profilformen der Fresnel-Struktur 3 des erfindungsgemäßen optischen Elementes 1; |
| Fig. 10 | eine weitere Ausführungsform des optischen Elementes 1 als Fresnel-Spiegel; |
| Fig. 11 | eine Schnittansicht zur Erläuterung der Umsetzung einer weiteren Freiformfläche als Fresnel-Struktur 3; |
| Fig. 12 | einen herkömmlichen asphärischen Spiegel zum Vergleich mit den Fresnel-Spiegeln gemäß Fig. 10; |
| Fig. 13A | eine Schnittansicht einer weiteren Freiformfläche 8, die als Fresnel-Struktur 3 auf einer gekrümmten Grundfläche 11 verwirklicht wird; |
| Fig. 13B | eine weitere Freiformfläche 8, die wiederum auf einer gekrümmten Grundfläche 11 optisch gleichwirkend als Fresnel-Struktur umgesetzt wird; |
| Fig. 14 | eine reflektive Fresnel-Struktur 3 gemäß einer weiteren Ausführungsform auf einem Spiegel 16 mit sphärischer Grundfläche 17; |
| Fig. 15 | eine perspektivische Ansicht einer weiteren Freiformfläche 8; |
| Fig. 16 | eine perspektivische Ansicht der entsprechenden Fresnel-Struktur der Wirkfläche 8 von Fig. 15 auf einer Zylindergrundfläche; |
| Fig. 17-18 | Schnittansichten einer Fresnel-Struktur 3 an einer gekrümmten Grundfläche 11; |
| Fig. 19A | eine perspektivische Ansicht eines Multifunktionsglases mit einem Umlenkelement 38, das eine erfindungsgemäße Fresnel-Struktur 3 enthält; |
| Fig. 19B | eine schematische Seitenansicht des an einem Brillengestellt 23 befestigten Multifunktionsglases 1 von Fig. 19A; |

Fig. 20A  eine schematische Seitenansicht einer weiteren Ausführungsform der erfindungsgemäßen Anzeigevorrichtung;

Fig. 20B  eine perspektivische Darstellung der Anzeigevorrichtung von Fig. 20A;

Fig. 20C  eine perspektivische Darstellung einer Anzeigevorrichtung gemäß einer weiteren Ausführungsform;

Fig. 20D  eine perspektivische Darstellung einer Anzeigevorrichtung gemäß einer weiteren Ausführungsform;

Fig. 20E  eine Draufsicht des Überlagerungsbereiches 29 des Multifunktionsglases 1 von Fig. 19A und 20A;

Fig. 21  eine Schnittansicht einer kompletten Facette 5 der Fresnel-Struktur 3 des Umlenkelementes 38 von Fig. 19A;

Fig. 22  eine Abwandlung der Facette von Fig. 21;

Fig. 23  eine weitere Abwandlung der Facette von Fig. 21;

Fig. 24  eine Schnittansicht einer weiteren Fresnel-Struktur 3;

Fig. 25  eine Schnittansicht einer nicht zusammenhängenden Fresnel-Struktur 3, und

Fig. 26  eine Schnittansicht eines Strahlvereinigers 1 mit einer Fresnel-Struktur 3.

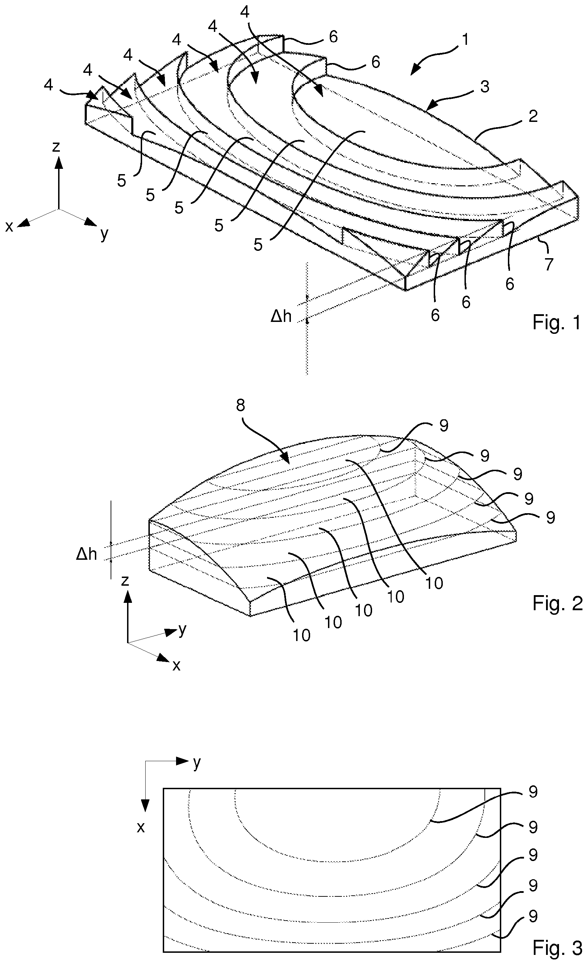

Bei der in Fig. 1 gezeigten Ausführungsform umfasst das erfindungsgemäße optische Element 1, das hier als Linse ausgebildet ist, auf seiner Oberseite 2 eine Fresnel-Struktur 3 mit mehreren Fresnel-Segmenten 4.

Jedes Fresnel-Segment 4 weist eine optisch wirksame Facette 5 auf. Um die in Fig. 1 gezeigte Stufenform zu erzielen, umfasst in der Regel jedes Fresnel-Segment 4 noch eine Flanke 6, die sich hier im Wesentlichen senkrecht zur Unterseite 7 des optischen Elementes 1 erstreckt.

Die gemeinsame optische Wirkung der Facetten 5 entspricht einer gedachten optischen Wirkfläche 8, wie sie in Fig. 2 gezeigt ist, wobei die optische Wirkfläche 8 gekrümmt ist und keine Spiegel- oder Rotationssymmetrie aufweist. Wie aus dem Vergleich der Figuren 1 und 2 leicht ersichtlich ist, ist die Darstellung in Fig. 2 um 90° um die z-Achse gegenüber der Darstellung in Fig. 1 gedreht. Die gedachte optische Wirkfläche 8 kann wie folgt als Fresnel-Struktur 3 gemäß Fig. 1 umgesetzt werden.

Die Wirkfläche 8 wird in z-Richtung in Abschnitte gleicher Höhe $\Delta h$ geteilt. Dadurch ergeben sich Schnittlinien 9, die auch als Höhenlinien bezeichnet werden können und die jeweils einen Flächenabschnitt 10 der Wirkfläche 8 begrenzen. Die Flächenabschnitte 10 werden in z-Richtung alle so zueinander verschoben, dass jeweils die untere Schnittlinie (die mit dem geringeren z-Wert) und somit der untere Rand der Facette 5 auf gleicher Höhe (in z-Richtung) liegen. Von der jeweiligen oberen Schnittlinie der Flächenabschnitte 10 und somit dem oberen Rand der Facette 5 wird dann die senkrechte Flanke 6 bis zur unteren Schnittlinie des direkt benachbarten Flächenabschnittes 10 geführt, um zu der gestuften Ausbildung der Fresnel-Struktur 3 gemäß Fig. 1 zu gelangen. In der Draufsicht in Fig. 3 des optischen Elementes 1 von Fig. 1 sind die oberen Ränder zu sehen.

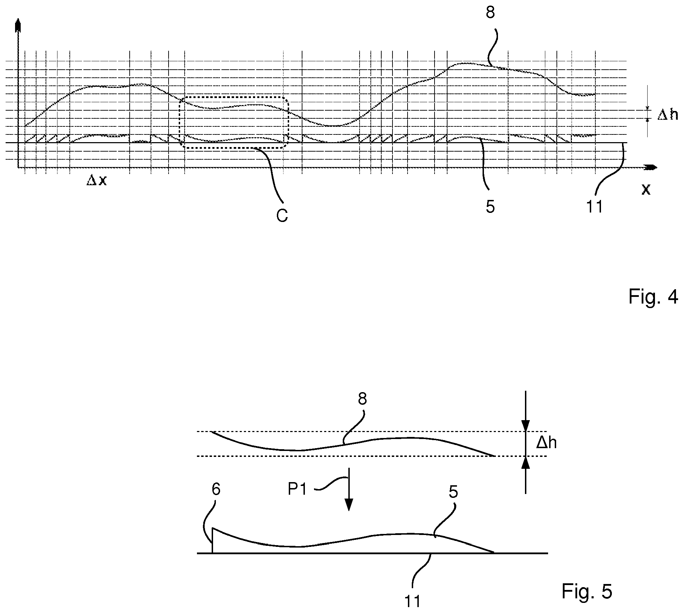

Die durchzuführenden Schritte, um von der gedachten optischen Wirkfläche 8, die gekrümmt ist und keine Spiegel- oder Rotationssymmetrie aufweist, zu der gewünschten Fresnel-Struktur 3 zu gelangen, werden nachfolgend in Verbindung mit Fig. 4 im Detail erläutert, in der ein xz-Schnitt der Wirkfläche 8 gezeigt ist, die verschieden ist zur Wirkfläche 8 von Fig. 2, aber wiederum gekrümmt ist und keine Spiegel- oder Rotationssymmetrie aufweist. Die Aufteilung in Flächenabschnitte 10 (in der Schnittdarstellung von Fig. 4 sind diese Flächenabschnitte natürlich Linienabschnitte) gleicher Höhe ist durch die gestrichelten Schnittlinien in Fig. 4 dargestellt.

In der vergrößerten Darstellung des Details C in Fig. 5 ist ersichtlich, daß der gezeigte Flächenabschnitt 10 aufgrund des vorgegebenen Abstandes $\Delta h$ eindeutig definiert und dann auf die Höhe $z_0$ abgesenkt wird, wie durch den Pfeil P1 schematisch dargestellt ist. Ferner wird noch auf der linken Seite des Flächenelementes 10 die Flanke 6 hinzugefügt, die sich senkrecht zur Höhe $z_0$ erstreckt. Auf der Höhe $z_0$ liegt somit eine ebene Grundfläche 11, auf der die Fresnel-Struktur 3 ausgebildet ist.

Für die Fresnel-Struktur 3 läßt sich somit die nachfolgende Formel 1 aufstellen, wobei $z_F$ die Fresnel-Struktur 3, $z_{Grundfläche}$ die Flächenform der Grundfläche 11 (hier eine Ebene), auf der die Fresnel-Struktur aufgebracht ist, und $z_{Facette}$ die Fresnel-Facetten 5 relativ zur Grundfläche beschreibt:

$$z_F = z_{Grundfläche} + z_{Facette} \tag{1}$$

Die Fläche $z_{Facette}$ der Facetten, die auch als "gefresnelte" Freiformfläche bezeichnet werden kann, berechnet sich nach der folgenden Formel 2

$$z_{Facette} = \text{modulo}(z_{Wirkfläche}, \Delta h) \tag{2},$$

wobei die Wirkfläche 8 durch die nachfolgende Flächenformel $z_{Wirkfläche}$ beschrieben ist

$$z_{Wirkfläche}(x, y) = K1 + K2 + b_{10}x + b_{01}y + b_{11}xy + b_{21}x^2y + b_{12}xy^2 + \sum_{\substack{i=2\\j=2}}^{\substack{N\\M}} b_{ij}x^i y^j \tag{3},$$

bei der K1 den konischen Term in x-Richtung und K2 den konischen Term in y-Richtung, wie nachfolgend angegeben ist, bezeichnen

$$K1 = \frac{C_x x^2}{1 + \sqrt{1 - (1 + k_x)c^2 x^2}} \tag{4},$$

$$K2 = \frac{C_y y^2}{1 + \sqrt{1 - (1 + k_y)c^2 y^2}} \tag{5}.$$

Durch die Anwendung der Modulo-Funktion auf die Wirkfläche 8 wird die Wirkfläche 8 in z-Richtung in Abständen mit gleicher Höhe Δh geteilt. Somit ist die maximale Höhe der Facetten 5 jeweils Δh. Die verwendete Modulo-Funktion ist nachfolgend angegeben

$$modulo(a, m) = a - \left\lfloor \frac{a}{m} \right\rfloor \cdot m \tag{6},$$

wobei die Gaußkiammer $\left\lfloor \dfrac{a}{m} \right\rfloor$ die größte ganze Zahl bezeichnet, die kleiner oder gleich der Zahl in der Gaußklammer ist, also das Ergebnis der Division a/m ohne den Rest der Division. Damit ergibt sich für die Facettenflächen die nachfolgende Formel

$$z_{Facette} = modulo(z_{Wirkfläche}, h) = z_{Wirkfläche} - \left\lfloor \frac{z_{Wirkfläche}}{\Delta h} \right\rfloor \cdot \Delta h \tag{7}.$$

Gemäß dem oben beschriebenen Vorgehen kann basierend auf einer gewünschten optischen Wirkfläche 8, die gekrümmt ist und keine Spiegel- oder Rotationssymmetrie aufweist und nachfolgend auch Freiformfläche 8 bezeichnet wird, die entsprechende Fresnel-Struktur 3 abgeleitet werden, die die entsprechende optische Wirkung bereitstellt. Aufgrund der Stufenform kann zwar mit der Fresnel-Struktur 3 nicht dieselbe optische Wirkung erreicht werden, die eine Linse hätte, deren Grenzfläche gemäß der Freiformfläche 8 ausgebildet ist, jedoch wird eine vergleichbare optische Wirkung erreicht.

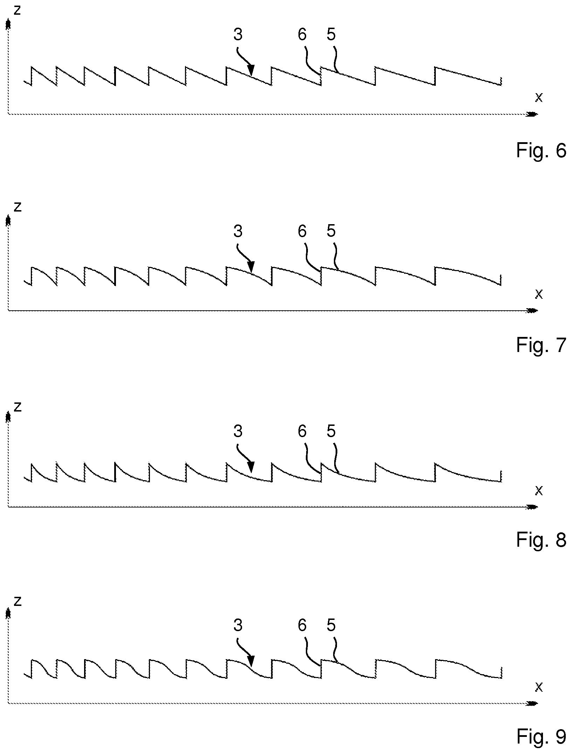

Wie der Darstellung in Figuren 4 und 5 zu entnehmen ist, weisen die Facetten 5 die durch die Freiformfläche 8 im Höhenbereich Δh vorgegebenen Krümmungen auf. Um die Herstellung der Fresnel-Struktur 3 zu vereinfachen, ist es möglich, den Verlauf der einzelnen Facetten 5 an die entsprechende Flächenform der Freiformflächen anzunähern. Im einfachsten Falle kann der Verlauf linearisiert werden, wie in der Schnittansicht von Fig. 6 schematisch dargestellt ist. Es ist jedoch auch möglich, die Facetten mit einer konvexen Krümmung (Fig. 7) oder einer konkaven Krümmung (Fig. 8) zu versehen. Auch eine Näherung durch einen anderen Krümmungsverlauf ist möglich, wie dies beispielsweise in Fig. 9 angedeutet ist.

Mit diesem erfindungsgemäßen Vorgehen, eine beliebige Freiformfläche 8 auf einer planen Fläche als Fresnel-Struktur ausbilden zu können, ist beispielsweise ein bauraumoptimiertes Design möglich.

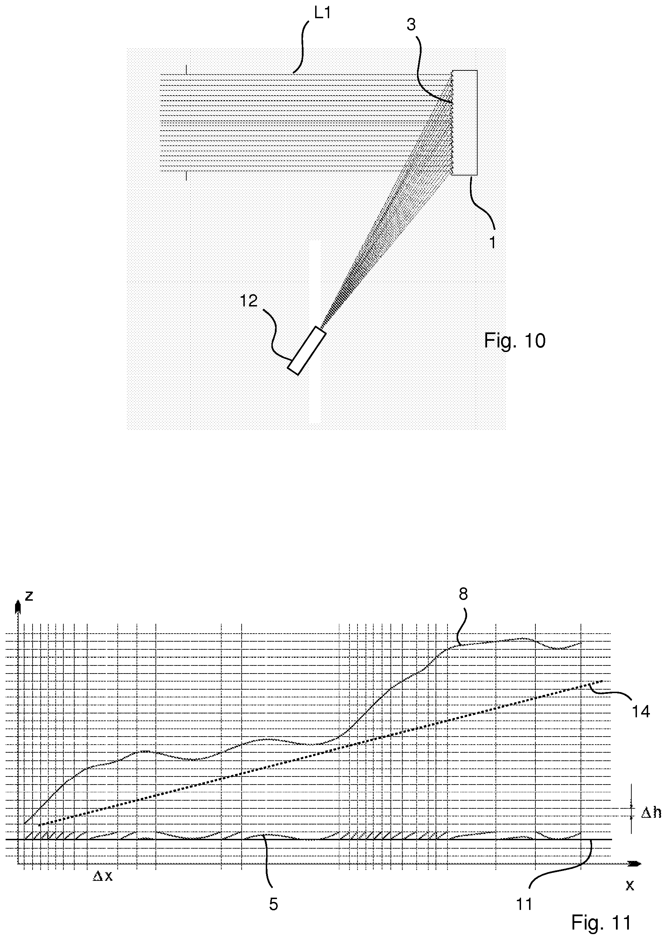

So kann zum Beispiel ein Fresnel-Spiegel 1 hergestellt werden, wie er in Fig. 10 gezeigt ist. Ein paralleles einfallendes Lichtbündel L1, wird mittels des Fresnel-Spiegels umgelenkt und gleichzeitig auf einen Detektor 12 fokussiert. Die makroskopische Ausdehnung des Fresnel-Spiegels 1 bzw. der Spiegelfläche ist hierbei senkrecht zur Einfallsrichtung des Lichtbündels L1. Dies ist möglich, da aufgrund der Fresnel-Struktur 3 die gewünschte Umlenkung und Fokussierung erfolgt.

Die Fresnel-Struktur 3 kann beispielsweise auf der in Fig. 11 in einer Schnittansicht gezeigten Freiformfläche 8 basieren. Zur Verdeutlichung der Verkippung der Freiformfläche 8 gegenüber der Grundfläche 11 ist eine Ausgleichsgerade 14 eingezeichnet. Die Ausbildung der Fresnel-Struktur erfolgt in gleicher Weise wie bereits beschrieben, so daß die Kippung der Freiformfläche 8 durch die auf der planen Grundfläche 11 ausgebildeten Fresnel-Struktur 3 bzw. der Facetten 5 der einzelnen Fresnel-Segmente 4 realisiert wird. Die Facetten 5 sind hier verspiegelt, damit die Fresnel-Struktur 3 als reflektive Fresnel-Struktur 3 wirkt.

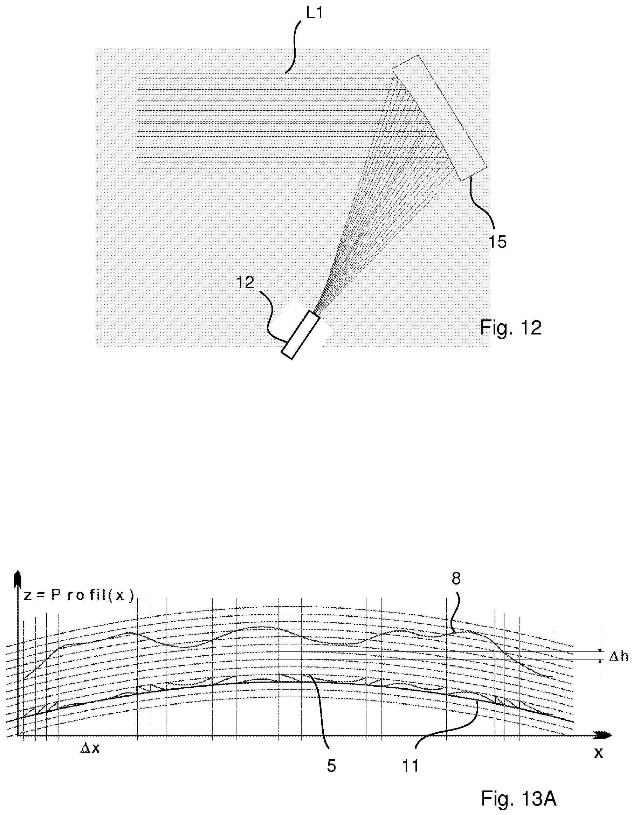

In diesem Ausführungsbeispiel kann als Grundflächenfunktion der Formel 1 folgendes angegeben werden $z_{Grundfläche} = 0$. Die Wirkfläche $z_{Wirkfläche}$ kann in gleicher Weise wie in der obigen Formel 3 angegeben werden, wobei insbesondere die linearen Terme $b_{10}x$ sowie $b_{01}y$ der Wirkfläche 8 durch die Anwendung der Modulo-Funktion in die Facetten 5 der Fresnel-Segmente 4 integriert werden können, so daß eine Verkippung der gesamten Grundfläche gegenüber dem einfallenden Lichtbündel L1 nicht notwendig ist. In Fig. 12 ist zum Vergleich ein herkömmlicher sphärischer Spiegel 15 gezeigt, der gegenüber der Einfallsrichtung des Lichtbündels L1 gekippt ist, um die gleiche Umlenkwirkung zu erreichen, die der Fresnel-Spiegel gemäß Fig. 10 aufweist. Ein solcher Spiegel 15 weist aufgrund der starken Verkippung große Koma- und Astigmatismusfehler auf, die in der Darstellung von Fig. 12 anhand des eingezeichneten Strahlenverlaufs erkennbar sind. Mit einer nicht gezeigten asphärischen Ausbildung des Spiegels 15, wenn diese parabolisch wäre, würde man eine ideale Abbildung für einen Punkt erreichen können. Jedoch wäre immer noch eine Verkippung des Spiegels gemäß Fig. 12 nötig. Bei dem erfindungsgemäßen Spiegel 1 in Fig. 10 ist diese Verkippung nicht notwendig, da die Verkippung in der Fresnel-Struktur 3 integriert ist. Somit kann, selbst wenn nur Bauraum für die Stellung des Spiegels 1 in Fig. 10 zur Verfügung stehen würde, die gewünschte Umlenk- und Fokussierwirkung mit dem erfindungsgemäßen Spiegel 1 erreicht werden. Mit einem herkömmlichen Spiegel 15 gemäß Fig. 12 wäre dies nicht möglich.

Bei den bisher beschriebenen Ausführungsbeispielen wurde als Grundfläche jeweils eine plane Fläche bzw. eine Ebene angenommen. Natürlich ist es auch möglich, eine davon abweichende Grundfläche vorzusehen, wenn z.B. die Fresnel-Struktur 3 auf einer sphärisch gekrümmten Linsenoberfläche ausgebildet werden soll. In diesem Fall kann mittels der Fresnel-Struktur 3 quasi ein Feintuning in der Art durchgeführt werden, daß z.B. weitere Aberrationen der Linse oder der Optikgruppe, in der die Linse eingesetzt wird, korrigiert werden.

Wie in Fig. 13A gezeigt, wird die Freiformfläche 8 in Abständen gleicher Höhe $\Delta h$ aufgeteilt, wobei hier die Höhe jeweils relativ zur lokalen Flächennormalen der Grundfläche 11 betrachtet wird. Der Abstand der eingezeichneten Schnittlinien ist somit jeweils zur Grundfläche 11 konstant.

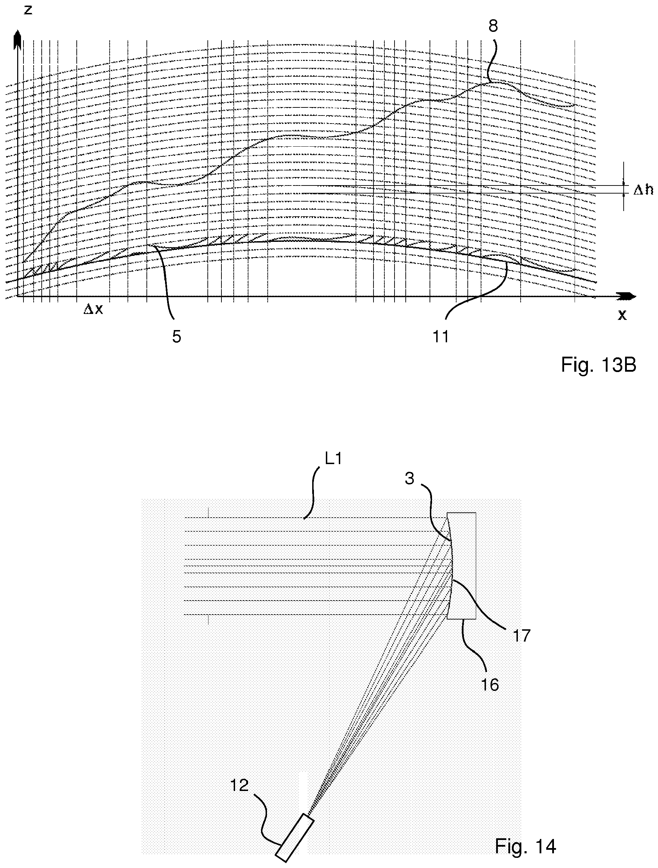

In Fig. 13B ist ein Beispiel gezeigt, bei der die Freiformfläche 8 gegenüber der sphärischen Grundfläche 11 stark gekippt ist. Auch in diesem Fall ist es keine Problem, die Freiformfläche 8 als Fresnel-Struktur 3 auf der Grundfläche 11 auszubilden, ohne daß die makroskopische Form der Grundfläche 11 verändert werden muß. Die Höhe $\Delta h$ kann hier wie auch bei allen anderen Ausführungsformen im Bereich von 5 - 500 $\mu m$, insbesondere im Bereich von 0,01 - 0,1 mm und besonders bevorzugt im Bereich von 0,05 bis 0,3 mm liegen. Ferner muß die Höhe $\Delta h$ nicht konstant sein, sondern kann hier wie auch bei allen anderen Ausführungsformen variieren. So kann z.B. $\Delta h$ mit zunehmendem z-Wert selbst zu- oder abnehmen.

In Fig. 14 ist ein Beispiel gezeigt, bei dem eine reflektive Fresnel-Struktur 3 auf einem Spiegel 16 mit sphärischer Grundfläche 17 vorgesehen ist, um eine Parabolspiegelfunktion zu verwirklichen. Dazu muß lediglich in der obigen Formel 1 für die Grundfläche $z_{Grundfläche}$ folgende Formel eingesetzt werden

$$z_{Grundfläche} = R - sgn(R)\sqrt{R^2 - x^2 - y^2} \tag{8},$$

wobei R der Krümmungsradius der sphärischen Grundfläche 17 ist sowie sgn(R) = 1, falls R > 0 (d.h. konvexe Fläche), sgn(R) = -1, falls R < 0 (d.h. konkave Fläche), sgn(R) = 0 für R = 0. Für die Wirkfläche $z_{Wirkfläche}$ wird die nachfolgende Formel angenommen

$$z_{Wirkfläche} = \sum_{i=0}^{M} \sum_{j=0}^{N} \left( c_{k(i,j)} \cdot x^i \cdot y^j \right) \tag{9},$$

wobei k(i,j) wie folgt bestimmt ist

$$k(i,j) = \frac{(i+j)^2 + i + 3 \cdot j}{2} + 1 \tag{10}.$$

Als Tiefe der Fresnel-Struktur 3 bzw. -Zacken in z-Richtung und somit für den Wert $\Delta h$ wurde 0,01 mm angenommen. Ferner wurde M = 8 und N = 8 eingesetzt. Damit ergaben sich die folgenden Fresnel-Polynomkoeffizienten

| i | j | k | Wert |
|---|---|---|---|
| 1 | 0 | 2 | -5.0000E-01 |
| 2 | 1 | 8 | -2.0725E-06 |
| 2 | 2 | 13 | 5.1285E-07 |
| 2 | 0 | 4 | 5.1661E-03 |
| 0 | 2 | 8 | 8.1971E-03 |
| 0 | 3 | 10 | -2.7623E-06 |
| 4 | 0 | 11 | 1.7796E-05 |
| 0 | 5 | 21 | 7.0842E-04 |

Alle nicht genannten Koeffizienten $k(i,j)$, die in der obigen Tabelle nicht aufgeführt sind, sind gleich 0. Der Radius R des sphärischen Spiegels ist hier (-)50 mm.

Die Zuordnung zwischen den Indizes i, j, k kann auch durch nachfolgende Matrix angegeben werden

$$\begin{pmatrix} 1 & 3 & 6 & 10 & 15 & 21 \\ 2 & 5 & 9 & 14 & 20 & 27 \\ 4 & 8 & 13 & 19 & 26 & 34 \\ 7 & 12 & 18 & 25 & 33 & 42 \\ 11 & 17 & 24 & 32 & 41 & 51 \\ 16 & 23 & 31 & 40 & 50 & 61 \end{pmatrix} \tag{11}$$

wobei j waagerecht von 0 - 5 und i senkrecht von 0 - 5 läuft und die zugeordneten Matrixwerte den entsprechenden k-Indexwert angeben.

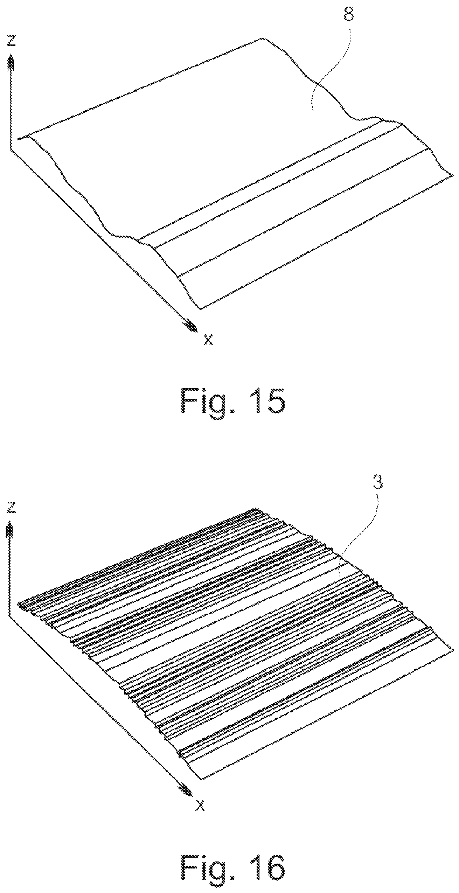

In Fig. 15 ist perspektivisch eine nur mit x und nicht mit y variierende Wirkfläche 8 gezeigt. In Fig. 16 ist die entsprechende Fresnel-Struktur 3 auf einer Grundfläche, die als Zylinderfläche ausgebildet ist, gezeigt. Auch hier ist somit die Wirkfläche 8 optisch in eine auf einer nicht ebenen Grundfläche (hier eine Zylinderfläche) ausgebildeten Fresnel-Struktur 3 umgesetzt. Die Fresnel-Struktur 3 von Fig. 16 kann reflektiv oder transmissiv ausgebildet werden.

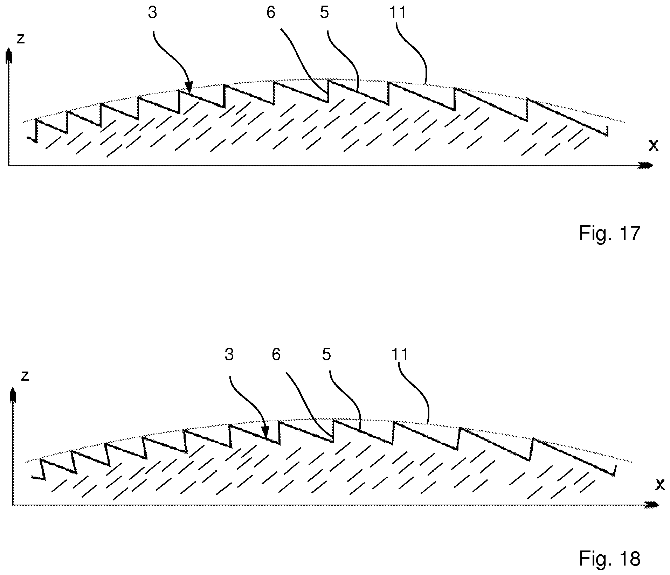

In Fig. 17 ist eine Schnittansicht einer Fresnel-Struktur 3 an einer gekrümmten Grundfläche 11 gezeigt, bei der die Facetten 5 jeweils linear ausgebildet sind. Die einzelnen Flanken 6 sind zueinander parallel ausgerichtet, wobei der ursprüngliche Verlauf der Grundfläche 11 noch schematisch eingezeichnet ist. Bei dieser nicht beanspruchten Variante wurde in Abwandlung von Formel 1 die Facettenfunktion $z_{Facette}$ von der Grundflächenfunktion $z_{Grundfläche}$ abgezogen, so daß die Fresnel-Struktur 3 wie folgt beschreibbar ist:

$$z_F = z_{Grundfläche} - z_{Facette} \tag{12}.$$

Diese Art der Berechnung von $z_F$ ist natürlich auch bei allen bereits beschriebenen Ausführungsformen sowie bei allen noch nachfolgenden Ausführungsformen möglich.

In Fig. 18 ist eine Abwandlung des Profils von Fig. 17 gezeigt, das sich im wesentlichen darin unterscheidet, daß die Flanken 6 im Schnitt nicht mehr zueinander parallel orientiert sind, sondern radial zum nicht gezeigten Mittelpunkt der Grundfläche 11.

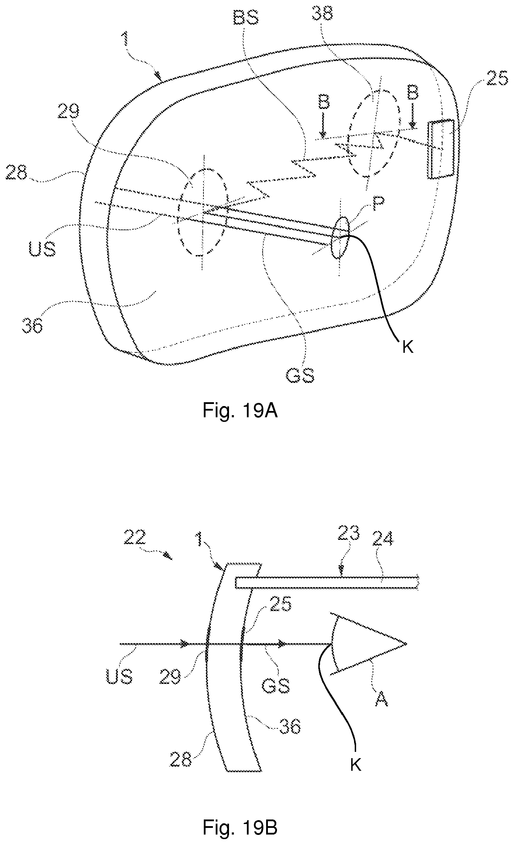

Eine gemäß Fig. 17 oder Fig. 18 gezeigte Fresnel-Struktur 3 kann auf der Vorderseite 28 eines Multifunktionsglases 1 als Umlenkelement 38 vorgesehen sein, wobei in diesem Fall die Facetten 5 bevorzugt verspiegelt sind. Das Multifunktionsglas 1 ist in Fig. 19A schematisch dargestellt, wobei die Profilform gemäß Fig. 17 bzw. 18 der Schnittansicht entlang der Schnittlinie B-B entspricht. An der Rückseite 36 des Multifunktionsglases 1 oder von der Rückseite 36 beabstandet ist ein Bildgeber 25 vorgesehen, der ein Bild erzeugt, das einem Benutzer, wie nachfolgend noch detaillierter beschrieben wird, in Überlagerung mit der Umgebung dargeboten werden soll.

Aufgrund der Anordnung des Bildgebers 25 tritt ein Bildstrahlenbündel BS über die Rückseite 36 in das Multifunktionsglas 1 ein und trifft auf die Fresnel-Struktur des Umlenkelementes 38, das eine Umlenkung des Bildstrahlenbündels BS nach links bewirkt, so daß das Bildstrahlenbündel BS im Multifunktionsglas 1 aufgrund innerer Totalreflexion an der Rückseite 36 sowie an der Vorderseite 28 bis zu einem Überlagerungsbereich 29 geführt wird, in dem das Bildstrahlenbündel BS mit Umgebungsstrahlung US zu einem gemeinsamen Strahlenbündel GS überlagert wird. Die Überlagerung erfolgt so, daß in einem Pupillenbereich P für einen Benutzer das mittels des Bildgebers 25 erzeugte Bild in Überlagerung mit der Umgebung wahrnehmbar ist.

Wie der schematischen Seitenansicht in Fig. 19B entnommen werden kann, kann das Multifunktionsglas 1 an einem Brillengestell 23 befestigt sein, das seitliche Brillenbügel 24 aufweist. Eine so gebildete Anzeigevorrichtung 22 kann in Art einer Brille aufgesetzt werden, wobei in diesem Fall das Auge des Benutzers A im Pupillenbereich P liegt, so daß der Benutzer bei aufgesetzter Anzeigevorrichtung 22 das mittels des Bildgebers 25 erzeugte Bild in Überlagerung mit der Umgebung wahrnehmen kann.

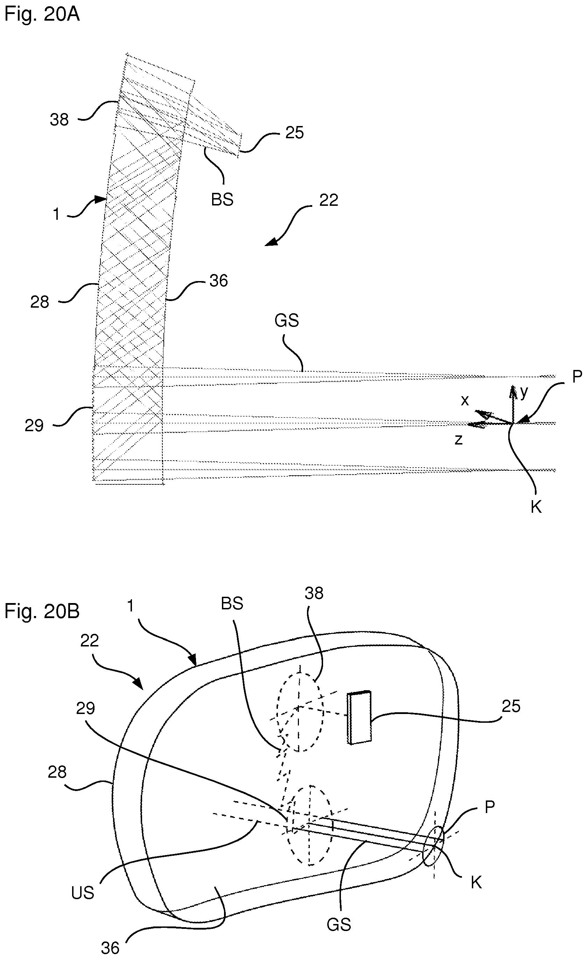

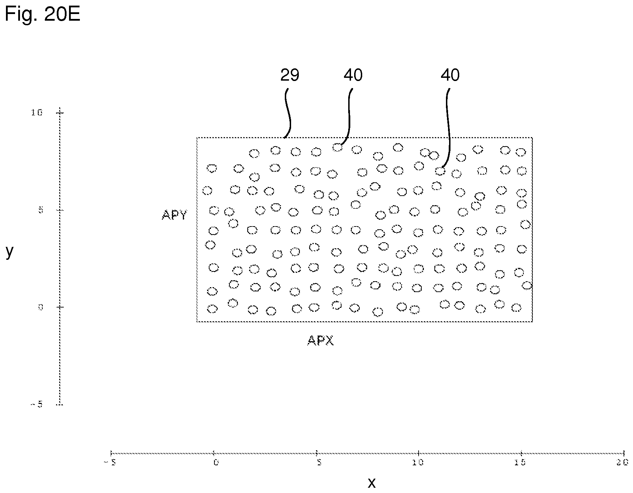

In Fig. 20A ist eine schematische Seitenansicht einer weiteren Ausführungsform der erfindungsgemäßen Anzeigevorrichtung 22 gezeigt, wobei lediglich das Multifunktionsglas 1, der Bildgeber 25, die Augenposition K sowie einige beispielhafte Strahlenverläufe für das Bildstrahlenbündel BS und das gemeinsame Strahlenbündel GS eingezeichnet sind. Die restlichen Elemente, wie z.B. das Brillengestell und die Umgebungsstrahlung US sind zur Vereinfachung der Darstellung nicht eingezeichnet. In Fig. 20B ist die entsprechende perspektivische Ansicht der Anzeigevorrichtung 22 von Fig. 20A dargestellt.

Wie der Darstellung in Fig. 20A und 20B zu entnehmen ist, ist im Unterschied zu der Ausführungsform von Fig. 19A und 19B das Umlenkelement 38 nicht mehr seitlich neben dem Überlagerungsbereich 29, sondern oberhalb des Überlagerungsbereiches 9 angeordnet.

Das Umlenkelement 38 ist hier ein Einkoppelabschnitt bzw. -bereich, über den das Bild des Bildgebers 25 so in das Multifunktionsglas 1 eingekoppelt wird, daß das Bildstrahlenbündel BS mittels interner Totalreflexionen bis zum Überlagerungs- bzw. Auskoppelabschnitt 29 geführt wird. Dazu bewirkt das Umlenkelement eine Strahlengangfaltung und weist eine abbildende Eigenschaft auf.

Das Multifunktionsglas 1 weist eine sphärisch gekrümmte, konvexe Vorderseite 8 mit einem Radius von 143,5 mm sowie eine sphärisch gekrümmte, konkave Rückseite 36 mit einem Krümmungsradius von 140,0 mm auf, wobei die Dicke des Brillenglases 3,5 mm beträgt und als Material für das Brillenglas PMMA verwendet wurde.

Die Fresnel-Struktur des Umlenkelementes 38 kann in gleicher Weise wie die reflektive Fresnel-Struktur 3 auf dem Spiegel 16 mit sphärische Grundfläche 17 gemäß Fig. 14 und Formeln 8 bis 10 angegeben werden. Die Tiefe der Fresnel-Struktur 3 bzw. der Fresnel-Zacken in z-Richtung und somit der Wert für $\Delta h$ beträgt hier 0,1 mm und die Fresnel-Polynomkoeffizienten lauten wie folgt:

| i | j | k | Wert |
|---|---|---|---|
| 0 | 1 | 2 | 1.978676e+000 |
| 0 | 2 | 5 | -1.683682e-001 |
| 0 | 3 | 9 | 6.583886e-003 |
| 0 | 4 | 14 | -1.592897e-004 |
| 0 | 5 | 20 | 1.673948e-006 |
| 2 | 0 | 3 | -1.260064e-002 |
| 2 | 1 | 7 | -1.594787e-004 |
| 2 | 2 | 12 | 5.047552e-005 |
| 2 | 3 | 18 | -1.124591e-006 |
| 2 | 4 | 25 | -3.539047e-008 |
| 2 | 5 | 33 | 6.224301e-010 |
| 4 | 0 | 10 | 2.326468e-004 |
| 4 | 1 | 16 | -2.256722e-005 |
| 4 | 3 | 31 | 2.658107e-008 |

Alle nicht genannten Koeffizienten k(i, j), die in obigen Tabellen nicht aufgeführt sind, sind gleich 0.

Auch die Fresnel-Struktur für den Auskoppelabschnitt bzw. -bereich 29 kann mittels der Formeln 8 bis 10 beschrieben werden. Die entsprechenden Fresnel-Polynomkoeffizienten sind in der nachfolgenden Tabelle angegeben, wobei wiederum alle nicht genannten Koeffizienten k(i, j), die in der Tabelle nicht aufgeführt sind, gleich 0 sind.

| i | j | k | Wert |
|---|---|---|---|
| 0 | 1 | 2 | 3.889550e-001 |
| 0 | 2 | 5 | -3.833425e-003 |
| 0 | 3 | 9 | -2.736702e-007 |
| 0 | 4 | 14 | 1.935143e-006 |
| 0 | 5 | 20 | 9.627233e-007 |
| 2 | 0 | 3 | -5.487613e-003 |
| 2 | 1 | 7 | 5.506765e-005 |
| 2 | 2 | 12 | 1.146413e-006 |
| 2 | 3 | 18 | 2.124906e-006 |
| 2 | 4 | 25 | -7.838697e-008 |
| 2 | 5 | 33 | -7.841081e-008 |
| 4 | 0 | 10 | 4.996870e-008 |
| 4 | 1 | 16 | -5.316581e-007 |
| 4 | 3 | 31 | -2.683089e-008 |

Auch bei der Fresnel-Struktur des Auskoppelabschnittes 29 beträgt $\Delta h$ gleich 0,1 mm.

Die Lage der optischen Flächen im globalen Koordinatensystem der Pupille P des Auges A (der Koordinatenursprung liegt bei K) kann unter Bezugnahme auf die Richtung der Koordinaten x, y und z in Fig. 20A jeweils bezogen auf die Fläche in der unmittelbar vorgehenden Zeile wie folgt angegeben werden (die in Fig. 20A eingezeichneten Koordinaten x, y und z beziehen sich auf das Koordinatensystem der Pupille P, das nur für die Beschreibung der Fresnel-Strukturen des Einkoppelabschnittes 38 und des Auskoppelabschnittes 29 in Verbindung mit Fig. 20A und 20B verwendet wird):

| Fläche | x-Koordinate [mm] | z-Koordinate [mm] | Kippwinkel um x-Achse (°) |
|---|---|---|---|
| P | 0,000 | 0,000 | 0,000 |
| 29 | 0,000 | 21,500 | 0,000 |
| 38 | 0,000 | 0,000 | 0,000 |
| 25 | 0,000 | 16,828 | 14,042 |

Bei dem Ein- und Auskoppelabschnitt 38 und 29 ist die Lage des Koordinatensystems angegeben, bezüglich der die Fresnel-Fläche in der oben angegebenen Art und Weise definiert ist. Daher sind für die Fläche 38 als Werte jeweils 0 angegeben, da die Koordinatensysteme für die Flächen 29 und 38 zusammenfallen. Die Lage und Größe der genutzten Aperturfläche der jeweiligen Fresnel-Fläche, was dem Einkoppelabschnitt 38 sowie dem Auskoppelabschnitt 29 entspricht, sind bezüglich des flächeneigenen Koordinatensystems wie folgt:

| Element | x-Koordinate [mm] | y-Koordinate [mm] | APX [mm] | APY [mm] |
|---|---|---|---|---|
| 29 | 0,000 | 0,000 | 14,5 | 7,1 |
| 38 | 0,000 | 19,87 | 11,6 | 4,8 |

In dieser Tabelle ist in der Spalte APX die Breite der Fresnel-Struktur in x-Richtung und in der Spalte APY die Breite der Fresnel-Struktur in y-Richtung angegeben. Ferner ist der Abstand des Auskoppelabschnittes 38 vom Einkoppelabschnitt 29 angegeben. Der Abstand der Augenpupille P zum Brillenglas (Rückseite 38) beträgt hier 18 mm, wobei das Sichtfeld 20 x 4° bei einem Durchmesser von 6 mm beträgt.

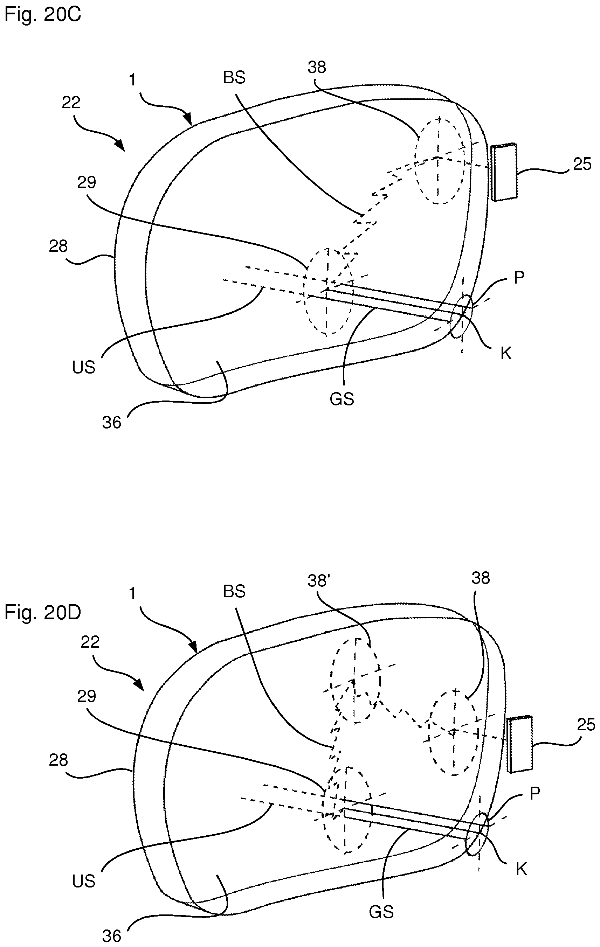

In Fig. 20C und 20D sind Abwandlungen der Anzeigevorrichtung 22 gemäß Fig. 20A und 20B gezeigt. Bei der Ausführungsform von Fig. 20C ist der Einkoppelabschnitt 38 sowohl lateral als auch vertikal zum Auskoppelabschnitt 29 versetzt. Bei der Ausführungsform von Fig. 20D ist zwischen dem Einkoppelabschnitt und dem Auskoppelabschnitt 38 und 29 ein Umlenkabschnitt 38' auf der Vorderseite 28 gebildet, der in gleicher Weise wie der Einkoppelabschnitt 38 als Fresnel-Struktur (hier als reflektive Fresnel-Struktur) ausgebildet sein kann. Insbesondere kann der Umlenkabschnitt 38' neben der von ihm bewirkten Strahlengangfaltung auch noch eine abbildende Eigenschaft aufweisen.

Die Ausbildung des Einkoppel- und Auskoppelabschnittes 38, 29 sowie gegebenenfalls des Umlenkabschnittes 38' auf der gleichen Seite des Multifunktionsglases 1 (hier auf der Vorderseite 28) erleichtert die Herstellung des Multifunktionsglases 1.

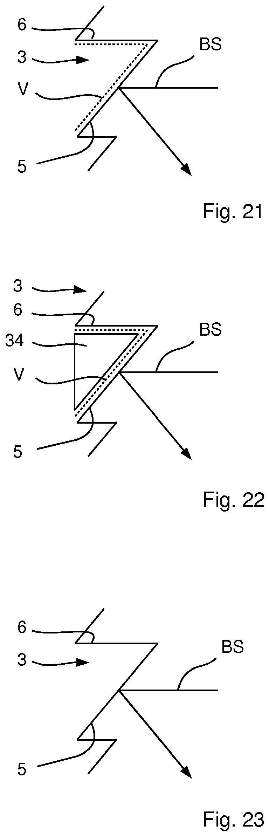

In Fig. 21 ist eine Schnittansicht einer kompletten Facette 5 der Fresnel-Struktur 3 des Umlenkelementes 38 gezeigt. Wie aus der Darstellung ersichtlich ist, weist die Facette 5 eine Verspiegelung V auf, damit die gewünschte Strahlenumlenkung des Bildstrahlenbündels BS stattfindet.

In Fig. 22 ist eine Abwandlung gezeigt, bei der freie Bereiche, der aufgrund der Neigung der Facette 5 relativ zur Vorderseite 28 des Multifunktionsglases 1 gebildet ist, mit Material 34 bis zur Vorderseite 28 aufgefüllt ist. Die Auffüllung ist bevorzugt so durchgeführt, daß eine glatte, durchgehende Vorderseite 28 gebildet ist. Als Material 34 kann insbesondere das gleiche Material wie für das Multifunktionsglas 1 selbst verwendet werden.

Es ist jedoch auch möglich, die Fresnel-Struktur 3 so auszulegen, daß die Umlenkung des Bildstrahlenbündels BS durch innere Totalreflexion erfolgt, so daß eine Verspiegelung nicht mehr notwendig ist, wie in Fig. 23 angedeutet ist.

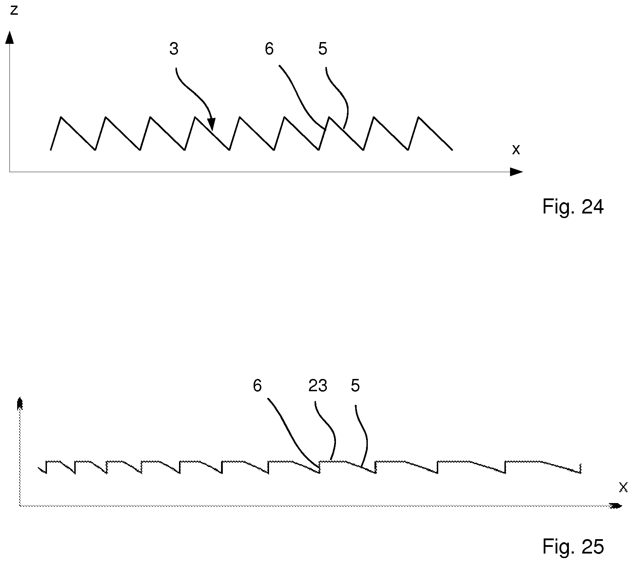

In Fig. 24 ist eine Schnittansicht einer weiteren Fresnel-Struktur 3 gezeigt. Bei dieser Fresnel-Struktur 3 erstrecken sich die Flanken 6 nicht wie bei den meisten bisher beschriebenen Ausführungsformen senkrecht (also hier in z-Richtung), sondern sind ebenfalls etwas geneigt. Dies vereinfacht die Fertigung der Fresnel-Struktur 3. Jedoch ist es bevorzugt, wenn der Neigungswinkel der Flanken 6 möglichst klein ist, so daß sie quasi senkrecht verlaufen.

Alle bisher beschriebenen Fresnel-Strukturen 3 waren zusammenhängende Fresnel-Strukturen. Darunter wird hier verstanden, daß die einzelnen Fresnel-Facetten 5 stets durch die Flanken 6 miteinander verbunden sind. Es ist jedoch auch möglich, die Fresnel-Facetten 5 voneinander beabstandet vorzusehen und zwischen den einzelnen Fresnel-Facetten 5 Abschnitte 23 einzufügen, die beispielsweise Abschnitte der Grundfläche 11 sein können. Dies kann einfach dadurch realisiert werden, daß von der ermittelten Fresnel-Fläche $z_F$ Bereiche bzw. Abschnitte durch den Verlauf der Grundfläche $z_{Grundfläche}$ in diesen Abschnitten ersetzt werden. Ein Profil einer solchen Fresnel-Struktur 3 ist in Fig. 25 schematisch angedeutet.

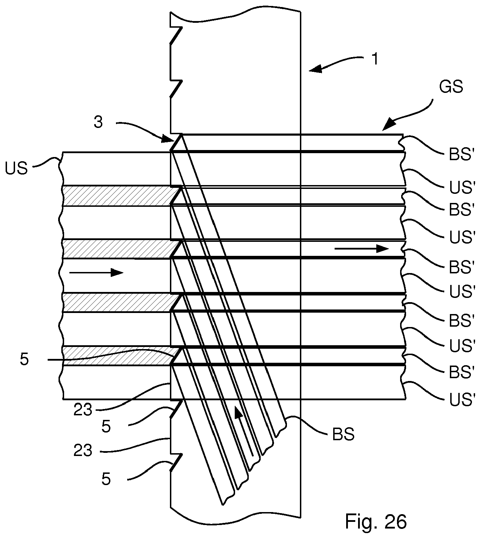

Wenn man die Fresnel-Facetten 5 verspiegelt, kann auf diese Art beispielsweise ein Strahlvereiniger 1 bereitgestellt werden, wie er in einer vergrößerten Schnittansicht in Fig. 26 dargestellt ist. Mit dem Strahlvereiniger 1 kann ein erstes Strahlenbündel BS mit einem zweiten Strahlenbündel US zu einem gemeinsamen Strahlenbündel GS überlagert werden. Wie der Darstellung in Fig. 26 entnommen werden kann, sind die Fresnel-Facetten 5 gegenüber der Normalen der Vorderseite 28 so gekippt, daß der Teil des ersten Strahlenbündels BS (auch als Bildstrahlenbündel BS bezeichnet), der auf die jeweilige Fresnel-Facette 5 trifft, nach rechts als Bildteilstrahl BS' umgelenkt wird. Der restliche Teil des Bildstrahlenbündels BS, der nicht auf die Fresnel-Facetten 5 trifft, wird an der Vorderseite 28 so reflektiert und/oder transmittiert, daß er nicht Teil des gemeinsamen Strahlenbündels GS wird.

Der Teil des Umgebungsstrahlenbündels US, der (in Fig. 26 von links) auf die Rückseite der Fresnel-Facetten 5 trifft, wird von den Fresnel-Facetten so abgeschattet, daß er nicht Teil des gemeinsamen Strahlenbündels GS wird. Daher ist dieser Teil des Umgebungsstrahlenbündels US schraffiert eingezeichnet. Der restliche Teil des Umgebungsstrahlenbündels US tritt als Umgebungsteilstrahlen US' durch die transmissiven Bereiche 23 zwischen den Fresnel-Facetten 5 hindurch.

Die nicht zusammenhängende Fresnel-Struktur 3 gemäß Fig. 26 bewirkt somit eine Überlagerung des durch die transmissiven Bereiche 23 hindurchtretenden Teils US' des Umgebungsstrahlenbündels US mit dem an den Fresnel-Facetten 5 reflektierten Teil BS' des Bildstrahlenbündels BS zu einem gemeinsamen Strahlenbündel GS.

Der Überlagerungsbereich 29 des Multifunktionsglases 1 von Fig. 19A sowie der Überlagerungsbereich 29 des Multifunktionsglases 1 von Fig. 20A, 20C und 20D können jeweils in der Art des Strahlvereinigers gemäß Fig. 26 realisiert werden.

Bevorzugt werden dazu z. B. in kreisförmigen Gebieten 40 die Fresnel-Segmente ausgebildet (als reflektive Fresnel-Segmente), wie in der schematischen Draufsicht auf den beispielsweise rechteckigen Überlagerungsbereich 29 in Fig. 20B gezeigt ist. In den Bereichen dazwischen bleibt das sphärische Brillenglas erhalten, so daß diese normale Lichtdurchtrittsbereiche darstellen.

Um eine regelmäßige Anordnung bzw. Struktur der Fresnel-Abschnitte zu verhindern, können diese z. B. wie folgt angeordnet werden. Es werden kreisförmige Bereich festgelegt, deren Durchmesser wie folgt bestimmt werden kann

$$D = \sqrt{(100-T)/100/\pi} \cdot 2 \cdot APX / N$$

Wobei T die geforderte Transmission für das Umgebungslicht in Prozent, N die Anzahl der Kreise in x-Richtung und APX die Aperturbreite in x-Richtung ist. Die Kreise werden zunächst in einem festen Raster mit Rasterabstand APX/N in x und y äquidistant angeordnet. Danach werden die Kreismittelpunktslagen leicht modifiziert, indem die Richtung und Länge der Mittelpunktverschiebung ausgewürfelt werden. Die Länge wird hier so gewählt, daß kein Überlappungseffekt zwischen benachbarten Kreisen auftritt.

Als Statistikfunktionen für Länge und Winkel können folgende Formeln angewendet werden.

Statistische Verschiebungslänge:

$$r = (APX / N / 2 - D / 2) \cdot randf$$

Statistische Verschiebungsrichtung:

$$w = 360 \cdot randf$$

Wobei randf einen Zufallswert zwischen 0 und 1 liefert. Die modifizierte Position der Kreise 40 ergibt sich dann gemäß den nachfolgenden Formeln:

$$x = ( i / N ) \cdot APX + r \cdot \cos( w )$$

$$y = ( j / N ) \cdot APX + r \cdot \sin( w )$$

$$M = round ( APY / APX )$$

Wobei die Funktion round das Argument (APY/APX) auf ganze Zahlen rundet.

Natürlich kann auch jede andere Art der Verteilung der Fresnel-Struktur gewählt werden, wobei bevorzugt eine nicht regelmäßige Anordnung gewählt wird.

**Patentansprüche**

1. Anzeigevorrichtung mit
   einer auf den Kopf eines Benutzers aufsetzbaren Haltevorrichtung (23),
   einem an der Haltevorrichtung (23) befestigten Bilderzeugungsmodul (25), das ein Bild erzeugt, und
   einem an der Haltevorrichtung (23) befestigten Multifunktionsglas (1), das eine Vorderseite (28), eine Rückseite (36), einen Einkoppelbereich und einen Auskoppelbereich aufweist, wobei das erzeugte Bild über den Einkoppelbereich in das Multifunktionsglas (1) eingekoppelt, im Multifunktionsglas durch innere Totalreflexion an der Rückseite (36) sowie an der Vorderseite (28) bis zum Auskoppelbereich geführt und über den Auskoppelbereich so ausgekoppelt wird, dass der Benutzer im auf den Kopf aufgesetzten Zustand der Haltevorrichtung (23) das ausgekoppelte Bild in Überlagerung mit der Umgebung wahrnehmen kann,
   wobei der Einkoppelbereich eine Fresnel-Struktur (3) umfasst, die bei der Einkopplung des Bildes in das Multifunktionsglas (1) eine Strahlengangfaltung bewirkt und eine abbildende Eigenschaft aufweist, wobei die Fresnel-Struktur (3) auf der Vorderseite (28) ausgebildet ist und mehrere Fresnel-Segmente (4) aufweist, deren optisch wirksamen Facetten (5) optisch einer gedachten optischen Wirkfläche (8) entsprechen, die gekrümmt ist sowie weder eine Spiegel- noch eine Rotationssymmetrie aufweist, wobei das erzeugte Bild vom Bilderzeugungsmodul (25) über die Rückseite (36) in das Multifunktionsglas (1) eintritt und zur Einkopplung auf die Fresnel-Struktur (3) des Einkoppelbereiches trifft.

2. Anzeigevorrichtung nach Anspruch 1, **dadurch gekennzeichnet, dass** die Vorderseite (28) gekrümmt ausgebildet ist.

3. Anzeigevorrichtung nach einem der obigen Ansprüche, **dadurch gekennzeichnet, dass** die Fresnel-Struktur (3) reflektiv ausgebildet ist.

4. Anzeigevorrichtung nach einem der obigen Ansprüche, **dadurch gekennzeichnet, dass** die optische Wirkfläche (8) keine Translationssymmetrie aufweist.

5. Anzeigevorrichtung nach einem der obigen Ansprüche, **dadurch gekennzeichnet, dass** die maximale Höhe ($\Delta h$) jeder Facette (5) gleich groß ist.

**6.** Anzeigevorrichtung nach einem der obigen Ansprüche, **dadurch gekennzeichnet, dass** die Facettenform eine Näherung, insbesondere eine lineare Näherung der Form des entsprechenden Flächenabschnitts (10) der gedachten Wirkfläche (8) ist.

**7.** Anzeigevorrichtung nach einem der obigen Ansprüche, **dadurch gekennzeichnet, dass** die Facetten (5) im Schnitt konkav gekrümmt sind.

**8.** Anzeigevorrichtung nach einem der Ansprüche 1 bis 6, **dadurch gekennzeichnet, dass** die Facetten (5) im Schnitt konvex gekrümmt sind.

**9.** Anzeigevorrichtung nach einem der obigen Ansprüche, **dadurch gekennzeichnet, dass** die Fresnel-Segmente (4) direkt benachbart sind.

**10.** Anzeigevorrichtung nach einem der Ansprüche 1 bis 8, **dadurch gekennzeichnet, dass** die Fresnel-Segmente (4) voneinander beabstandet sind.

**11.** Verfahren zur Herstellung eines Multifunktionsglases einer Anzeigevorrichtung nach einem der obigen Ansprüche, bei dem in dem Einkoppelbereich die Fresnel-Struktur, die eine abbildende sowie eine für den Strahlengang faltende Eigenschaft aufweist, auf der Vorderseite des Multifunktionsglases gebildet wird, wobei die Fresnel-Struktur mehrere Fresnel-Segmente aufweist und die optisch wirksamen Facetten der Fresnel-Segmente so ausgebildet werden, dass sie optisch einer gedachten optischen Wirkfläche entsprechen, die gekrümmt ist und weder eine Spiegel- noch eine Rotationssymmetrie aufweist.

**12.** Verfahren nach Anspruch 11, bei dem die Fresnel-Struktur auf einer gekrümmt ausgebildeten Vorderseite des Multifunktionsglases gebildet wird.

**13.** Verfahren nach Anspruch 11 oder 12, bei dem die optische Wirkfläche keine Translationssymmetrie aufweist.

**14.** Verfahren nach einem der Ansprüche 11 bis 13, durch gekennzeichnet, dass das Multifunktionsglas basierend auf Herstellungsdaten hergestellt wird, die rechnerisch dadurch erzeugt werden, dass eine optische Modellfläche in mehrere Höhenbereiche aufgeteilt wird und die Flächenabschnitte der einzelnen Höhenbereiche oder Näherungen dieser Flächenabschnitte an einer Grundfläche rechnerisch so angeordnet werden, dass sie optisch der optischen Wirkfläche entsprechen.

**15.** Verfahren nach Anspruch 14, **dadurch gekennzeichnet, dass** die Flächenabschnitte bzw. die Näherungen der Flächenabschnitte rechnerisch an einer gekrümmt ausgebildeten Vorderseite des Multifunktionsglases angeordnet werden.

**Claims**

**1.** Display device with
a holding device (23) that can be fitted onto the head of a user,
an image-generating module (25) which generates an image and is attached to the holding device (23), and
a multifunction glass (1) which comprises a front side (28), a rear side (36), a coupling-in area and a coupling-out area and is attached to the holding device (23), wherein the generated image is coupled into the multifunction glass (1) via the coupling-in area, guided in the multifunction glass through total internal reflection at the rear side (36) as well as at the front side to the coupling-out area and coupled out via the coupling-out area such that when the holding device (23) is fitted onto the head the user can perceive the coupled-out image superimposed on the surroundings, wherein the coupling-in area comprises a Fresnel structure (3) which brings about a folding of the beam path during the coupling of the image into the multifunction glass (1) and has an imaging property, wherein the Fresnel structure (3) is formed on the front side (28) and comprises several Fresnel segments (4), wherein the optically effective facets (5) of the Fresnel segments (4) optically correspond to an imaginary optical effective surface (8) which is curved and has neither mirror nor rotational symmetry, wherein the image generated by the image-generating module (25) enters into the multifunction glass (1) via the rear side (36) and strikes the Fresnel structure (3) of the coupling-in area for coupling-in.

**2.** Display device according to claim 1, **characterized in that** the front side (28) is formed curved.

**3.** Display device according to one of the above claims, **characterized in that** the Fresnel structure (3) is formed reflective.

**4.** Display device according to one of the above claims, **characterized in that** the optical effective surface (8) has no translational symmetry.

**5.** Display device according to one of the above claims, **characterized in that** the maximum height ($\Delta h$) of each facet (5) is the same.

**6.** Display device according to one of the above claims, **characterized in that** the facet shape is an approximation, in particular a linear approximation of the shape of the corresponding surface section (10) of the imaginary effective surface (8).

**7.** Display device according to one of the above claims, **characterized in that** the facets (5) are curved concavely in cross-section.

**8.** Display device according to one of claims 1 to 6, **characterized in that** the facets (5) are curved convexly in cross-section.

**9.** Display device according to one of the above claims, **characterized in that** the Fresnel segments (4) are directly neighbouring.

**10.** Display device according to one of claims 1 to 8, **characterized in that** the Fresnel segments (4) are spaced apart from each other.

**11.** Method for producing a multifunction glass of a display device according to one of the above claims, in which the Fresnel structure which has an imaging property as well as a folding property for the beam path is formed in the coupling-in area at the front side of the multifunction glass, wherein the Fresnel structure has several Fresnel segments and the optically effective facets of the Fresnel segments are formed such that they optically correspond to an imaginary optical effective surface which is curved and has neither mirror nor rotational symmetry.

**12.** Method according to claim 11, in which the Fresnel structure is formed on a curved front side of the multifunction glass.

**13.** Method according to claim 11 or 12, in which the optical active surface has no translational symmetry.

**14.** Method according to claims 11 to 13, **characterized in that** the multifunction glass is produced on the basis of production data which are generated computationally by dividing an optical model surface into several height regions and computationally arranging the surface sections of the individual height regions or approximations of these surface sections at a base surface such that they optically correspond to the optical effective surface.

**15.** Method according to claim 14, **characterized in that** the surface sections or the approximations of the surface sections are arranged computationally at a curved front side of the multifunction glass.

## Revendications

**1.** Dispositif d'affichage comportant
un dispositif de retenue (23) pouvant être placé sur la tête d'un utilisateur, un module générateur d'image (25) fixé sur le dispositif de retenue (23) et générant une image, et
un verre multifonction (1) fixé sur le dispositif de retenue (23) et présentant une face avant (28), une face arrière (36), une zone d'entrée et une zone sortie, dans lequel l'image générée est injectée dans le verre multifonction (1) par l'intermédiaire de la zone d'entrée, guidée jusqu'à la zone de sortie dans le verre multifonction par une réflexion interne totale sur la face arrière (36) et sur la face avant (28) et ainsi extraite par l'intermédiaire de la zone de sortie de telle manière à ce que l'utilisateur puisse percevoir l'image extraite superposée à l'environnement dans l'état dans lequel le dispositif de retenue (23) est placé sur la tête,
dans lequel la zone d'entrée comprend une structure de Fresnel (3) qui, lorsque l'image est injectée dans le verre multifonction (1), provoque un repliement du trajet optique et présente une propriété de formation d'image, dans lequel la structure de Fresnel (3) est réalisée sur la face avant (28) et comprend une pluralité de segments de Fresnel (4) dont les facettes optiquement actives (5) correspondent optiquement à une surface optiquement active imaginaire (8) qui est incurvée et n'est ni symétrique dans un miroir ni symétrique de rotation, dans lequel l'image générée par le module générateur d'image (25) pénètre dans le verre multifonction (1) par l'intermédiaire de la face arrière (36) et rencontre la structure de Fresnel (3) de la zone d'entrée pour l'injection.

**2.** Dispositif d'affichage selon la revendication 1, **caractérisé en ce que** la face avant (28) est incurvée.

**3.** Dispositif d'affichage selon l'une des revendications précédentes, **caractérisé en ce que** la structure de Fresnel (3) est réalisée de manière réfléchissante.

**4.** Dispositif d'affichage selon l'une des revendications précédentes, **caractérisé en ce que** la surface optiquement active (8) n'est pas de symétrique de translation.

**5.** Dispositif d'affichage selon l'une des revendications précédentes, **caractérisé en ce que** les hauteurs maximales ($\Delta$h) de chaque facette (5) sont égales.

**6.** Dispositif d'affichage selon l'une des revendications précédentes, **caractérisé en ce que** la forme des facettes est une approximation, en particulier une approximation linéaire de la forme de la section de surface correspondante (10) de la surface active (8) imaginaire.

**7.** Dispositif d'affichage selon l'une des revendications précédentes, **caractérisé en ce que** les facettes (5) sont incurvées de manière à présenter une section concave.

**8.** Dispositif d'affichage selon l'une des revendications 1 à 6, **caractérisé en ce que** les facettes (5) sont incurvées de manière à présenter une section convexe.

**9.** Dispositif d'affichage selon l'une des revendications précédentes, **caractérisé en ce que** les segments de Fresnel (4) sont directement adjacents.

**10.** Dispositif d'affichage selon l'une des revendications 1 à 8, **caractérisé en ce que** les segments de Fresnel (4) sont espacés les uns des autres.

**11.** Procédé de fabrication d'un verre multifonction d'un dispositif d'affichage selon l'une des revendications précédentes, dans lequel la structure de Fresnel présentant une propriété de formation d'image et de repliement du trajet du faisceau est formée dans la zone d'entrée sur la face avant du verre multifonction, dans lequel la structure de Fresnel comprend une pluralité de segments de Fresnel et les facettes optiquement actives des segments de Fresnel sont réalisées de manière à ce qu'elles correspondent optiquement à une surface optiquement active imaginaire qui est incurvée et n'est ni symétrique dans miroir ni symétrique de rotation.

**12.** Procédé selon la revendication 11, dans laquelle la structure de Fresnel est réalisée sur une face avant réalisée de manière incurvée du verre multifonction.

**13.** Procédé selon la revendication 11 ou 12, dans lequel la surface optiquement active n'est pas symétrique de translation.

**14.** Procédé selon l'une des revendications 11 à 13, **caractérisé en ce que** le verre multifonction est produit sur la base de données de fabrication générées par calcul en divisant une surface de modèle optique en une pluralité de plages de hauteur et **en ce que** les sections de surface des plages de hauteur individuelles ou d'approximations de ces plages de surface sont disposées par calcul sur une surface de base de manière à ce qu'elles correspondent optiquement à la surface optique active.

**15.** Procédé selon la revendication 14, **caractérisé en ce que** les sections de surface ou les approximations des sections de surface sont disposées par calcul sur une face avant réalisée de manière incurvée du verre multifonction.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13A

z

8

Δh

Δx

5

11

x

Fig. 13B

L1

3

17

16

12

Fig. 14

Fig. 15

Fig. 16

Fig. 17

Fig. 18

Fig. 19A

Fig. 19B

Fig. 20A

Fig. 20B

Fig. 20C

Fig. 20D

Fig. 20E

Fig. 21

Fig. 22

Fig. 23

Fig. 24

Fig. 25

Fig. 26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6989992 B2
- US 7178947 B2
- US 4510560 A
- WO 2008089992 A1
- WO 2004109349 A1